# EUROPÄISCHE PATENTSCHRIFT

(11) **EP 3 476 448 B1**
(45) Veröffentlichungstag und Bekanntmachung des Hinweises auf die Patenterteilung: **08.12.2021**
(21) Anmeldenummer: 17198096.4
(22) Anmeldetag: 24.10.2017
(51) Int. Cl.: A63F 13/57, A63F 13/24, A63F 13/428, A63F 13/52, A63G 31/00, G06F 3/01

(54) **VR-VORRICHTUNG ZUM ERZEUGEN UND DARSTELLEN EINER VIRTUELLEN REALITÄT**
VR DEVICE FOR GENERATING AND DISPLAYING A VIRTUAL REALITY
DISPOSITIF RV PERMETTANT DE GÉNÉRER ET DE PRÉSENTER UNE RÉALITÉ VIRTUELLE

(43) Veröffentlichungstag der Anmeldung: 01.05.2019
(73) Patentinhaber: VR Coaster GmbH & Co. KG, 67663 Kaiserslautern (DE)
(72) Erfinder: GORDT, Dennis, 79350 Sexau (DE)
(74) Vertreter: Westphal, Mussgnug & Partner Patentanwälte mbB

(56) Entgegenhaltungen:
- EP-A2- 1 847 912
- WO-A2-2016/075674
- DE-A1-102014 111 386
- JP-A- 2000 342 858
- US-A- 6 036 603
- US-A1- 2016 328 887
- US-A1- 2017 069 134
- MISHA SRA ET AL: "Procedurally generated virtual reality from 3D reconstructed physical space", PROCEEDINGS OF THE 22ND ACM CONFERENCE ON VIRTUAL REALITY SOFTWARE AND TECHNOLOGY , VRST '16, ACM PRESS, NEW YORK, NEW YORK, USA, 2. November 2016 (2016-11-02), Seiten 191-200, XP058306986, DOI: 10.1145/2993369.2993372 ISBN: 978-1-4503-4491-3
- HOFFMAN H G: "Physically touching virtual objects using tactile augmentation enhances the realism of virtual environments", VIRTUAL REALITY ANNUAL INTERNATIONAL SYMPOSIUM, 1998. PROCEEDINGS., IE EE 1998 ATLANTA, GA, USA 14-18 MARCH 1998, LOS ALAMITOS, CA, USA,IEEE COMPUT. SOC, US, 14. März 1998 (1998-03-14), Seiten 59-63, XP010268709, DOI: 10.1109/VRAIS.1998.658423 ISBN: 978-0-8186-8362-6
- ALBERT S. CARLIN ET AL: "Virtual reality and tactile augmentation in the treatment of spider phobia: a case report", BEHAVIOUR RESEARCH AND THERAPY., Bd. 35, Nr. 2, 1. Februar 1997 (1997-02-01), Seiten 153-158, XP055460221, GB ISSN: 0005-7967, DOI: 10.1016/S0005-7967(96)00085-X
- LUNG-PAN CHENG ET AL: "TurkDeck", PROCEEDINGS OF THE 28TH ANNUAL ACM SYMPOSIUM ON USER INTERFACE SOFTWARE & TECHNOLOGY, UIST '15, ACM PRESS, NEW YORK, NEW YORK, USA, 5 November 2015 (2015-11-05), pages 417-426, XP058076890, DOI: 10.1145/2807442.2807463 ISBN: 978-1-4503-3779-3
- Anonymous: "Tangible VR Props | Tangible Interfaces", , 18 October 2015 (2015-10-18), XP055807530, Retrieved from the Internet: URL:https://courses.media.mit.edu/2015fall /mas834/index.html?p=4760.html [retrieved on 2021-05-26]
- LAURI CONNELLY ET AL: "A Pneumatic Glove and Immersive Virtual Reality Environment for Hand Rehabilitative Training After Stroke", IEEE TRANSACTIONS ON NEURAL SYSTEMS AND REHABILITATION ENGINEERING, IEEE SERVICE CENTER, NEW YORK, NY, US, vol. 18, no. 5, 1 October 2010 (2010-10-01), pages 551-559, XP011373962, ISSN: 1534-4320, DOI: 10.1109/TNSRE.2010.2047588

## Beschreibung

Die vorliegende Erfindung betrifft eine VR-Vorrichtung zum Erzeugen und Darstellen einer virtuellen Realität.

Insbesondere aufgrund der steigenden Prozessorleistung von Computern und der steigenden drahtlos übertragbaren Datenmengen kann das Konzept der virtuellen Realität (VR) auf immer mehr Anwendungsbereiche übertragen werden. VR-Konzepte können in Themenparks, Fitnessstudios oder Escape-Rooms von Freizeitund Games-Zentren eingesetzt werden, wie es beispielsweise in der WO 2013/050473 A1 gezeigt ist. Die Themenparks, Fitnessstudios oder Escape-Rooms stellen einen VR-Abschnitt dar, in welchem die virtuelle Realität einem Benutzer zugänglich ist. Hierzu werden typischerweise Head-Mounted-Displays wie VR-Brillen verwendet. Derartige Head-Mounted-Displays sind in der US 2013/0083003 A1 offenbart.

Um die Attraktivität der virtuellen Realität zu steigern, können virtuelle Objekte in die virtuelle Realität einbezogen werden. Diese Objekte können als Phantasiefiguren wie Ritter oder Monster ausgestaltet sein. Damit eine weitreichende Immersion, also ein möglichst real empfundener Eindruck der virtuellen Realität, zu erreichen, muss dann, wenn der Benutzer mit dem Objekt in Berührung kommt, die äußere Form und/oder Haptik der Objekte zu derjenigen äußeren Form und/oder derjenigen Haptik passen, welche gemäß der virtuellen Realität vom Benutzer erwartet wird. Weichen die vom Benutzer wahrgenommene äußere Form und die vom Benutzer wahrgenommene Haptik der Objekte zu stark von der gemäß der virtuellen Realität zu erwartenden Haptik ab, wird die Immersion beeinträchtigt.

Die äußere Form und die Haptik von virtuellen Objekten werden mittels Haptik-Handschuhen, die auch als "Feedback-Devices" bezeichnet werden und die vom Benutzer der virtuellen Realität getragen werden, nachgebildet. Dabei stehen die äußere Form und die Haptik in enger Beziehung zueinander. Wenn ein Benutzer die Oberfläche eines virtuellen Objekts in der virtuellen Welt berührt, sollte er für eine weitreichende Immersion auch eine entsprechende Rückmeldung über die Haptik-Handschuhe bekommen. Dabei ist anzustreben, dass er nicht nur eine Rückmeldung dazu erhält, dass er die Oberfläche berührt, was beispielsweise mittels des Eindrucks eines Widerstands realisiert werden kann. Vielmehr sollte auch die Haptik derjenigen entsprechen, welche gemäß der virtuellen Realität zu erwarten ist.

Die zum Zeitpunkt des Prioritätstags der vorliegenden Anmeldung mit den Haptik-Handschuhen realisierbare Haptik stimmt aber nur in begrenztem Maße mit derjenigen Haptik überein, welche gemäß der virtuellen Realität zu erwarten wäre. Zudem ist der technische und monetäre Aufwand, der zum Einsatz der Haptik-Handschuhe erforderlich ist, sehr hoch, weshalb die Haptik-Handschuhe vergleichsweise selten eingesetzt werden.

In Misha Sra et al., "Procedurally generated virtual reality from 3D reconstructed physical space", 2. November 2016, in der US 2016/328887 A1, und in H. G. Hoffman "Physically touching virtual objects using tactile augmentation enhances the realism of virtual elements", 14. März 1998, werden VR-Vorrichtungen beschrieben, bei denen die äußere Umgebung hinsichtlich der dort angeordneten oder befindlichen Objekte erfasst wird. Diese werden entsprechend ihrer äußeren Form und Position in die virtuelle Realität eingeblendet, wobei dieses Objekt in der virtuellen Realität verfremdet dargestellt sein kann. Wenn der Benutzer der VR-Vorrichtung ein virtuelles Objekt berührt, berührt er gleichzeitig auch das reale Objekt.

In A. S. Carlin et al., "Virtual reality and tactile augmentation in the treatment of spider phobia", 1. Februar 1997, wird das haptische Erlebnis dadurch gesteigert, dass der Patient dann, wenn er eine virtuelle Spinne berühren will, in der Realität gleichzeitig eine Spielzeugspinne berührt.

Lung-Pan Cheng et al., "Turk Deck: Physical Virtual Reality Based on People", Proceedings of the 28th Annual ACM Symposium on User Interface Software & Technology, UIST '15, 8. November 2015, beschreibt ein System aus einer fest vorgegebenen Anzahl von Gegenständen, welche von Hilfskräften an Trägern wie einer Wand befestigt werden können, so dass die für den Benutzer der virtuelle Realität vorhandene reale Welt mit der virtuellen Realität bezüglich der äußeren Form übereinstimmt.

Harpreet beschreibt in "Tangible VR Props" (https://courses.media.mit.edu/2015fall/mas834/index.html%3Fp= 4760.html) Überlegungen, wie aufblasbare Gegenstände dazu verwendet werden können, die für den Benutzer der virtuelle Realität vorhandene reale Welt mit der virtuellen Realität bezüglich der äußeren Form in Einklang zu bringen.

Lauri Connelly et al., "A Pneumatic Glove and Immersive Virtual Reality Environment for Hand Rehabilitative Training After Stroke" (IEEE TRANSACTIONS ON NEURAL SYSTEMS AND REHABILITATION ENGINEERING, VOL. 18, NO. 5, OCTOBER 2010) offenbart die Verwendung eines aufblasbaren Handschuhs zur Behandlung von Schlaganfall-Patienten, um das Öffnen und Schließen der Hände zum Loslassen und Ergreifen eines Gegenstands zu trainieren.

Dabei kann der Gegenstand auch ausschließlich in einer virtuellen Welt existieren.

Weitere VR-Vorrichtungen sind in der JP 2000/342858 A und der US 6 036 603 A offenbart.

Aufgabe einer Ausführungsform der vorliegenden Erfindung ist es, eine VR-Vorrichtung zu schaffen, welche es auf einfache und kostengünstige Weise ermöglicht, Objekte und insbesondere frei bewegliche Objekte in die virtuelle Realität einzubinden, welche eine äußere Form und eine Haptik aufweisen, die derjenigen äußeren Form und derjenigen Haptik entspricht, welche gemäß der virtuellen Realität zu erwarten sind.

Diese Aufgabe wird mit den in Anspruch 1 angegebenen Merkmalen gelöst. Vorteilhafte Ausführungsformen sind Gegenstand der Unteransprüche.

Die vorliegende Erfindung betrifft eine VR-Vorrichtung zum Erzeugen und Darstellen einer virtuellen Realität, umfassend einen VR-Abschnitt, innerhalb welchem sich zumindest ein Benutzer und zumindest ein Objekt frei bewegen können, wobei die VR-Vorrichtung Mittel, mit welchen eine der Position und den Bewegungen des Benutzers und des Objekts im VR-Abschnitt entsprechende virtuelle Realität erzeugbar und auf einem dem Benutzer zugeordneten Head-Mounted-Display in Abhängigkeit der Position und der Bewegung des Benutzers im VR-Abschnitt darstellbar ist, und eine Positionserfassungseinrichtung zum Erfassen der Position und der Bewegungen des Benutzers und des Objekts im Abschnitt aufweist, wobei das Objekt eine äußere Form aufweist, welche zumindest hinsichtlich der geometrischen Form und Größe auf die gemäß einer virtuellen Realität oder einer anderen virtuellen Realität zu erwartende äußere Form angepasst ist.

Die Mittel, mit welchen eine der Position und den Bewegungen des Benutzers und des Objekts im VR-Abschnitt entsprechende virtuelle Realität erzeugbar und auf einem dem Benutzer zugeordneten Head-Mounted-Display in Abhängigkeit der Position und der Bewegung des Benutzers im VR-Abschnitt darstellbar ist, umfasst üblicherweise eine Recheneinheit, welche die Signale der Positionserfassungseinrichtung verarbeitet und daraus die virtuelle Realität erzeugt. Die so erzeugte virtuelle Realität wird insbesondere drahtlos mittels einer Übertragungseinrichtung an das Head-Mounted-Display übertragen, welches die virtuelle Realität dem Benutzer anzeigt.

Zum Erfassen der Position und der Bewegungen des Benutzers und des Objekts im VR-Abschnitt umfasst die Positionserfassungseinrichtung eine Anzahl von Sensoren, welche im VR-Abschnitt angeordnet sind und welche beispielsweise optisch die Position und die Bewegungen erfassen und in entsprechende Signale umwandeln.

Das zumindest eine Objekt weist dabei eine äußere Form auf, welche zumindest hinsichtlich der geometrischen Form und Größe auf die gemäß einer virtuellen Realität oder einer anderen virtuellen Realität zu erwartende äußere Form angepasst ist. Wie eingangs erwähnt, können die Objekte als Ritter oder Monster ausgebildet sein, die in die virtuelle Realität eingebunden sind. Es handelt sich folglich um Objekte, die in der realen Welt physisch vorhanden sind und nicht um ausschließlich in der virtuellen Realität existierende virtuelle Objekte. Es besteht daher die Möglichkeit, beispielsweise das mobile Objekt mit einer äußeren Form zu versehen, welche ein Benutzer von der Rüstung des Ritters erwartet. Insbesondere kann der Ritter ein Schwert und/oder ein Schutzschild tragen. Die äußere Form des Objekts kann hinsichtlich der geometrischen Form und Größe hierauf angepasst werden.

Erfindungsgemäß wird somit auf einfache und kostengünstige Weise eine Möglichkeit geschaffen, die Immersion zu erhöhen und dem Benutzer ein intensives Erleben der virtuellen Realität anzubieten.

Erfindungsgemäß umfasst die VR-Vorrichtung mehrere Formkörper, die an das Objekt lösbar anbringbar sind und die eine äußere Form aufweisen, welche auf die gemäß der virtuellen Realität zu erwartende äußere Form angepasst ist. Die Immersion wird dadurch vergrößert, dass dort, wo nach der virtuellen Realität ein Gegenstand erwartet wird, auch tatsächlich ein Gegenstand angetroffen wird. Wenn beispielsweise das Monster nach außen zeigende Flossen aufweist, können die Formkörper so geformt werden, dass sie die Flossen nachbilden. Der Formkörper kann aus Schaumstoff oder anderen leicht zu formenden Materialien bestehen, so dass die äußere Form des Objekts auf einfache Weise auf die gemäß der virtuellen Realität zu erwartende äußere Form angepasst werden kann. Insbesondere dann, wenn der Formkörper lösbar an einem gegebenen Objekt befestigt ist, kann das Objekt bezüglich der äußeren Form mit wenig Aufwand an eine andere virtuelle Realität angepasst werden. Beispielsweise kann das Objekt bezüglich der äußeren Form in einer virtuellen Realität einem Monster und in einer anderen virtuellen Realität einem Ritter nachgebildet sein. Schutzschilder und Schwerter sind als Spielzeugartikel erhältlich, welche als kostengünstige Formkörper verwendet werden können.

Erfindungsgemäß weist das Objekt eine Oberfläche mit einer Haptik auf, welche auf die gemäß der virtuellen Realität zu erwartende Haptik angepasst ist. Wie bereits erwähnt, können die Objekte als Ritter oder Monster ausgebildet sein, die in die virtuelle Realität eingebunden sind. Vorschlagsgemäß kann das Objekt mit einer metallischen Oberfläche versehen werden, welche eine Haptik aufweist, welche ein Benutzer von der Rüstung des Ritters erwartet. Je nach Ausgestaltung des Monsters kann das mobile Objekt eine haarige und/oder feuchte Oberfläche aufweisen. Eine derartige Oberfläche kann mit einem Kostüm oder einem Umhang auf einfache Weise realisiert werden.

Nach Maßgabe der Erfindung ist der Formkörper als eine aufblasbare Hülle ausgebildet. Die aufblasbare Hülle lässt sich leicht am Objekt befestigen und wieder von ihm lösen. Aufblasbare Hüllen können mehrere Kammern haben, die je nach äußerer Form des Objekts aufgeblasen werden können oder nicht. Folglich kann die äußere Form des Objekts schnell an die gemäß der virtuellen Realität zu erwartende äußere Form beispielsweise des Monsters oder des Ritters angepasst werden. Darüber hinaus kann die aufblasbare Hülle mehr oder weniger stark aufgeblasen werden, wodurch der Grad des Zurückweichens der Hülle bei Druckbelastung eingestellt werden kann. So kann ein mehr oder weniger stark nachgebender Formkörper bereitgestellt werden, je nachdem, wie es der Benutzer gemäß der virtuellen Realität erwartet.

Erfindungsgemäß ist vorgesehen, dass die Oberfläche von den Formkörpern gebildet wird. Wie erläutert, dient der Formkörper primär der Anpassung der äußeren Form des Objekts an die gemäß der virtuellen Realität zu erwartende äußere Form. Wie bereits erläutert, kann in der Ausführungsform als aufblasbare Hülle mittels der Formkörper der Grad des Zurückweichens eingestellt werden. Gemäß dieser Ausführungsform bilden die Formkörper auch die äußere Oberfläche, so dass nicht nur die äußere Form und der Grad des Zurückweichens, sondern auch die Haptik der Oberflächen von den Formkörpern bestimmt wird. Hierdurch wird insbesondere die Anpassung der Objekte an verschiedene virtuelle Realitäten erleichtert.

Bei einer weiteren Ausführungsform kann das Objekt bewegbare Abschnitte und die Positionserfassungseinrichtung am Objekt anbringbare Positionssensoren aufweisen, mit welchem die Bewegungen der bewegbaren Abschnitte erfassbar sind. Wie bereits eingangs erwähnt, ist die Positionserfassungseinrichtung so eingerichtet, dass sie die Position und die Bewegungen des Benutzers und des Objekts im VR-Abschnitt erfassen kann. Hierzu weist die Positionserfassungseinrichtung eine Anzahl von im VR-Abschnitt angeordnete Sensoren auf, die aber nicht am Objekt oder am Benutzer angeordnet sind. Im Gegensatz dazu sind die Positionssensoren nach dieser Ausführungsform an oder in den bewegbaren Abschnitten des Objekts angeordnet. Selbst geringe Bewegungen der bewegbaren Abschnitte können auf diese Weise genau erfasst werden, was die Immersion erhöht.

Eine weitergebildete Ausführungsform zeichnet sich dadurch aus, dass die VR-Vorrichtung einen Geruchserzeuger zum Erzeugen von Gerüchen umfasst, welche auf die gemäß der virtuellen Realität zu erwartende Gerüche angepasst sind. Wenn beispielsweise das Monster eine feuchte Oberfläche aufweist, kann ein vom Geruchserzeuger bereitgestellter moderiger, verwesungsähnlicher Geruch die Immersion weiter vergrößern.

Nach Maßgabe einer weiteren Ausführungsform kann das Objekt ein Roboter oder eine natürliche Person sein. Bei einem Roboter ist die Erfassung der Position und der Bewegung insofern einfacher, als dass sie vor dem ersten Einsatz im VR-Abschnitt festgelegt wird oder der Roboter seine aktuelle Position an die Positionserfassungseinrichtung übermitteln kann. Bei natürlichen Personen ist die Erfassung der Position und der Bewegung aufwendiger, da sie in nur sehr begrenztem Maße vorherbestimmt werden kann. Die am Objekt anbringbaren Positionssensoren bieten sich bei natürlichen Personen daher besonders an. Hierzu können aktive oder passive "Motion-Capture-Marker" verwendet werden, die der natürlichen Person angeheftet werden können und mit deren Hilfe die Bewegung in ein für die Positionserfassungseinrichtung lesbares Format umgewandelt werden kann. Die Positionssensoren können auch dafür verwendet werden, um Bewegungen des Mundes der natürlichen Personen zu erfassen und entsprechende Laute zu generieren, welche auf die gemäß der virtuellen Realität zu erwartenden Laute angepasst sind. Die Verwendung von natürlichen Personen als im VR-Abschnitt bewegliche Objekte hat den Vorteil, dass sie besser auf die Reaktion der Benutzer eingehen und so das Erlebnis des Benutzers im VR-Abschnitt intensivieren können. Zudem sind sie insgesamt flexibler einsetzbar und können sich schneller auf unterschiedliche virtuelle Realitäten einstellen.

Nach einer weiteren Ausführungsform umfasst die VR-Vorrichtung ein Routenvorgabemittel, welches derart eingerichtet ist, dass sich das Objekt auf einer vordefinierten Route innerhalb des VR-Abschnitts bewegt. Dieses Routenvorgabemittel bietet sich insbesondere an, wenn das Objekt als Roboter ausgestaltet ist. Aber auch für den Fall, dass das Objekt von einer natürlichen Person gebildet wird, kann das Routenvorgabemittel eingesetzt werden. In beiden Fällen kann erreicht werden, dass sich das Objekt weitgehend gleichmäßig innerhalb des VR-Abschnitts aufhält und die Wahrscheinlichkeit, dass jeder sich im VR-Abschnitt aufhaltender Benutzer mit dem Objekt in Berührung kommt, möglichst hoch ist.

Darüber hinaus kann die VR-Vorrichtung ein Routenvorgabemittel umfassen, welches derart eingerichtet ist, dass sich das Objekt auf einer nicht vordefinierten Route innerhalb des VR-Abschnitts bewegt. Mit anderen Worten kann sich das Objekt zufällig innerhalb des VR-Abschnitts bewegen. Die zufällige Bewegung des Objekts innerhalb des VR-Abschnitts wird sich bei natürlichen Personen üblicherweise ohnehin einstellen. Wenn das Objekt als ein Roboter ausgestaltet ist, muss die Route üblicherweise vorgegeben werden, beispielsweise, um zu verhindern, dass der Roboter den VR-Abschnitt verlässt. Wie bereits erwähnt, kann hierdurch erreicht werden, dass sich der Roboter weitgehend gleichmäßig im gesamten VR-Abschnitt aufhält und nicht bestimmte Bereiche auslässt. Allerdings wird hierdurch die Flexibilität des Roboters eingeschränkt. Ist hingegen das Routenvorgabemittel derart eingerichtet, dass sich das Objekt auf einer nicht vordefinierten Route innerhalb des VR-Abschnitts bewegt, kann der Roboter beispielsweise mit einem Benutzer länger in Interaktion treten und sich auf die Bewegungen des Benutzers einstellen. Die Immersion wird hierdurch weiter gesteigert.

Beispielhafte Ausführungsformen der Erfindung werden im Folgenden unter Bezugnahme auf die beigefügten Zeichnungen näher erläutert. Es zeigen
- Figur 1: eine prinzipielle Draufsicht auf eine erfindungsgemäße VR-Vorrichtung, und
- Figur 2: eine prinzipielle Darstellung einer Oberfläche eines Objekts der erfindungsgemäßen VR-Vorrichtung.

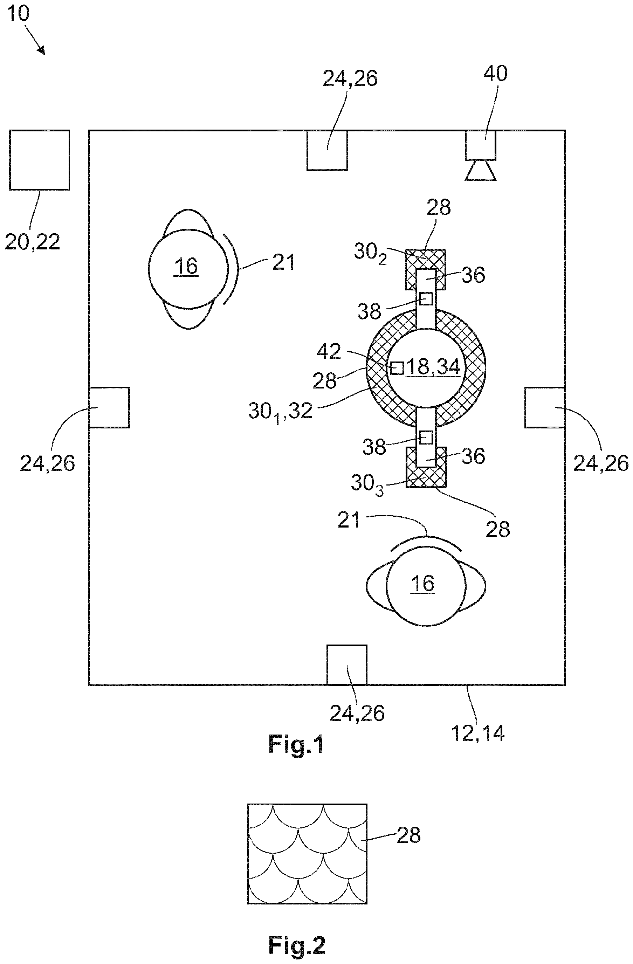

In Figur 1 ist eine erfindungsgemäße VR-Vorrichtung 10 anhand einer prinzipiellen Draufsicht dargestellt. Die VR-Vorrichtung 10 umfasst einen VR-Abschnitt 12, der mittels einer virtuellen und/oder mittels einer realen Wandung 14 begrenzt ist. Innerhalb des VR-Abschnitts 12 können sich zumindest ein Benutzer 16 und zumindest ein Objekt 18 frei bewegen. Weiterhin weist die VR-Vorrichtung 10 Mittel 20 auf, mit welchen eine der Position und den Bewegungen des Benutzers 16 und des Objekts 18 im VR-Abschnitt 12 entsprechende virtuelle Realität erzeugbar und auf einem dem Benutzer 16 zugeordneten Head-Mounted-Display 21 in Abhängigkeit der Position und der Bewegung des Benutzers 16 und des Objekts 18 im VR-Abschnitt 12 darstellbar ist. Die Mittel 20 umfassen im dargestellten Beispiel eine Recheneinheit 22. Darüber hinaus ist die VR-Vorrichtung 10 mit einer Positionserfassungseinrichtung 24 zum Erfassen der Position und der Bewegungen des Benutzers 16 und des Objekts 18 im VR-Abschnitt 12 ausgestattet. Die Positionserfassungseinrichtung 24 umfasst im dargestellten Beispiel vier im VR-Abschnitt 12 angeordnete Sensoren 26, mit denen die Position und die Bewegungen des Benutzers 16 und des Objekts 18 im VR-Abschnitt 12 erfasst und in entsprechende Signale umgewandelt werden kann. Diese Signale werden beispielweise über nicht dargestellte Datenleitungen an die Recheneinheit 22 weitergeleitet.

Das Objekt 18, welches sich im VR-Abschnitt 12 frei bewegen kann, weist eine Oberfläche 28 auf, welche in Figur 2 schematisch dargestellt ist und welche mit einer Haptik versehen ist, die auf die gemäß der virtuellen Realität zu erwartende Haptik angepasst ist.

Weiterhin sind insgesamt drei Formkörper 30₁ bis 30₃ lösbar am Objekt 18 befestigt, wobei die Formkörper 30 eine äußere Form aufweisen, welche auf die gemäß der virtuellen Realität zu erwartende äußere Form angepasst ist. Der zentrale Formkörper 30 ist als eine aufblasbare Hülle 32 ausgestaltet.

Das Objekt 18 kann als ein Roboter 34 oder als eine natürliche Person ausgestaltet sein. Im dargestellten Beispiel ist das Objekt 18 als ein Roboter 34 ausgeführt, allerdings gilt die folgende Beschreibung analog auch für natürliche Personen.

Der Roboter 34 kann sich mit nicht dargestellten Antriebsmitteln innerhalb des VR-Abschnitts 12 bewegen. Der Roboter 34 verfügt über zwei bewegbare Abschnitte 36, welche radial nach außen weisen und zumindest senkrecht zur Zeichenebene der Figur 1 bewegt werden können. An den freien Enden der bewegbaren Abschnitte 36 sind jeweils einer der Formkörper 30₂, 30₃ angeordnet. Zudem ist jeweils ein Positionssensor 38 an den bewegbaren Abschnitten 38 befestigt, welche mit der Positionserfassungseinrichtung 24 kommunizieren und die Bewegung der bewegbaren Abschnitte 36 erfassen.

Weiterhin umfasst die VR-Vorrichtung 10 einen Geruchserzeuger 40 zum Erzeugen von Gerüchen, welche auf die gemäß der virtuellen Realität zu erwartende Gerüche angepasst sind.

Die VR-Vorrichtung 10 wird auf folgende Weise betrieben: Zunächst wird das Motto der virtuellen Realität festgelegt. Beispielsweise soll sich die virtuelle Realität in einem alten, verlassenen Haus abspielen, in welchem zumindest ein Monster sein Unwesen treibt. Die entsprechende virtuelle Realität wird auf der Recheneinheit 22 hinterlegt. Aufgrund der Gestaltung der virtuellen Realität lässt sich ableiten, welche äußere Form und welche Haptik die Oberfläche 28 des Monsters haben muss, um eine weitreichende Immersion zu erhalten. Wie in Figur 2 dargestellt, soll das Monster eine fischartige, schuppige, feuchte und schleimige Oberfläche 28 aufweisen. Die Oberfläche 28 des Objekts 18 wird entsprechend ausgestaltet, so dass die Haptik des Objekts 18 auf die gemäß der virtuellen Realität zu erwartende Haptik des Monsters angepasst ist. Im dargestellten Beispiel sind die Oberflächen 28 der Formkörper 30 mit dieser Haptik ausgestattet.

Wie bereits erwähnt, bildet die aufblasbare Hülle 32 den zentralen Formkörper 30₁. Die aufblasbare Hülle 32 kann so stark aufgeblasen werden, dass sie bei Berührung mehr oder weniger stark nachgibt. Da es sich im dargestellten Beispiel um ein Monster mit fischartiger, feuchter und schleimiger Oberfläche 28 handelt, ist die aufblasbare Hülle 32 nur soweit aufgeblasen, dass sie bei Berührung deutlich nachgibt.

Weiterhin sind die Formkörper 30 an die äußere Form angepasst, welche gemäß der virtuellen Realität zu erwarten ist. Die bewegbaren Abschnitte 36 können beispielsweise Flossen des Monsters darstellen, so dass die Formkörper 30₂, 30₃, welche an den bewegbaren Abschnitten 38 angeordnet sind, entsprechend geformt sind.

Wie erwähnt, soll sich die virtuelle Realität in einem alten Haus abspielen, wobei das Monster eine fischartige, feuchte und schleimige Oberfläche 28 aufweisen soll. Der Geruchserzeuger 40 erzeugt daher einen moderigen, verwesungsähnlichen Geruch.

Bevor zumindest ein Benutzer 16 den VR-Abschnitt 12 betritt, wird ihm eines der Head-Mounted-Displays 21 ausgegeben, welches er wie eine Brille aufsetzt. Anschließend kann er den VR-Abschnitt 12 betreten. Er wird dabei zum Beispiel durch Gänge und über Treppen des alten Hauses geführt und trifft dabei auf das als der Roboter 34 ausgeführte Objekt 18, welches sich im VR-Abschnitt 12 bewegen kann und welches dem Benutzer als das Monster im Head-Mounted-Display 21 dargestellt wird. Die Position und die Bewegungen des Benutzers 16 werden von der Positionserfassungseinrichtung 24 erfasst und an die Recheneinheit 22 übermittelt, welche hieraus die entsprechende virtuelle Realität erzeugt und an das Head-Mounted-Display 21 übermittelt, welches die virtuelle Realität dem Benutzer 16 anzeigt.

Der Roboter 34 kann als Laufroboter ausgeführt sein und sich entlang des Bodens des VR-Abschnitts 12 bewegen oder an der Decke oder der Wandung 14 des VR-Abschnitts 12 mittels eines Schienensystems aufgehängt sein, entlang welchem der Roboter 34 bewegt werden kann. Der Roboter 34 ist mit einem Routenvorgabemittel 42 ausgestattet, welches dem Roboter 34 eine oder mehrere Routen vorgibt, entlang welchen er sich im VR-Abschnitt 12 bewegen soll. Das Routenvorgabemittel 42 kann zumindest teilweise auf der Recheneinheit 22 in Form eines Algorithmus implementiert sein. Die Route kann fest vordefiniert sein oder zumindest teilweise flexibel an die jeweilige Situation im VR-Abschnitt 12 angepasst werden. Der Roboter 34 kann mit nicht dargestellten Detektionsmitteln ausgerüstet sein, welches ihm ermöglichen, einen Benutzer 16 zu orten. Wenn die Routenvorgabemittel 42 eine feste Route vorgeben, kann hierdurch verhindert werden, dass der Roboter 34 zu nahe an einen Benutzer 16 heranfährt und ihn verletzen könnte. Ist eine solche Situation zu erwarten, bleibt der Roboter 34 solange stehen, bis dass sich der betreffende Benutzer 16 entfernt hat oder der Roboter 34 nimmt eine alternative, aber dennoch fest vorgegebene Route. Dennoch soll sich der Roboter 34 dem Benutzer 16 soweit nähern können, dass ein Kontakt möglich ist und der Benutzer 16 die äußere Form und die Haptik des Roboters 34 spüren kann.

Wenn die Routenvorgabemittel 42 keine feste Route vorgeben, kann sich der Roboter 34 auf einen Benutzer 16 so zubewegen, dass der Benutzer 16 mit dem Roboter 34 in Kontakt treten muss. Hierdurch spürt der Benutzer 16 die Haptik und die äußere Form der Oberfläche 28. Der Roboter 34 kann längere Zeit mit dem betreffenden Benutzer 16 in Interaktion treten und ihn beispielsweise verfolgen, wobei er sich der Geschwindigkeit, mit der sich der Benutzer 16 im VR-Abschnitt 12 bewegt, anpassen kann.

Zudem kann der Roboter 34 Geräusche von sich geben. Hierzu kann ein maulähnlich ausgestalteter, nicht dargestellter bewegbarer Abschnitt vorgesehen sein, der bewegt wird, wenn der Roboter 34 ein Geräusch von sich gibt. Auch diese Geräusche sind so ausgestaltet, dass sie denjenigen entsprechen, die gemäß der virtuellen Realität zu erwarten sind.

Nachdem der Benutzer 16 den VR-Abschnitt 12 vollständig durchlaufen hat, verlässt er diesen und gibt das Head-Mounted-Display 21 wieder ab.

### Bezugszeichenliste

- 10: VR-Vorrichtung
- 12: VR-Abschnitt
- 14: Wandung
- 16: Benutzer
- 18: Objekt

- 20: Mittel
- 21: Head-Mounted-Display
- 22: Recheneinheit
- 24: Positionserfassungseinrichtung
- 26: Sensor
- 28: Oberfläche

- 30, 30₁ - 30₃: Formkörper
- 32: Hülle
- 34: Roboter
- 36: bewegbarer Abschnitt
- 38: Positionssensor

- 40: Geruchserzeuger
- 42: Routenvorgabemittel

## Patentansprüche

1. VR-Vorrichtung (10) zum Erzeugen und Darstellen einer virtuellen Realität, umfassend
- einen VR-Abschnitt (12), innerhalb welchem sich zumindest ein Benutzer (16) und zumindest ein Objekt (18) frei bewegen können, wobei die VR-Vorrichtung (10)
- Mittel, mit welchen eine der Position und den Bewegungen des Benutzers (16) und des Objekts (18) im VR-Abschnitt (12) entsprechende virtuelle Realität erzeugbar und auf einem dem Benutzer (16) zugeordneten Head-Mounted-Display (21) in Abhängigkeit der Position und der Bewegung des Benutzers (16) im VR-Abschnitt (12) darstellbar ist, und
- eine Positionserfassungseinrichtung (24) zum Erfassen der Position und der Bewegungen des Benutzers (16) und des Objekts (18) im VR-Abschnitt (12) aufweist,
- wobei das Objekt (18) eine äußere Form aufweist, welche zumindest hinsichtlich der geometrischen Form und Größe auf die gemäß einer virtuellen Realität oder einer anderen virtuellen Realität zu erwartende äußere Form angepasst ist,
**dadurch gekennzeichnet, dass**
- die VR-Vorrichtung (10) mehrere Formkörper (30) umfasst, die an das Objekt (18) lösbar anbringbar sind und die eine äußere Form aufweisen, welche auf die gemäß der virtuellen Realität zu erwartende äußere Form angepasst ist,
- das Objekt (18) eine Oberfläche mit einer Haptik aufweist, welche auf die gemäß der virtuellen Realität zu erwartende Haptik angepasst ist,
- die Formkörper (30) als aufblasbare Hüllen (32) ausgebildet sind, und
- die Oberfläche von den Formkörpern (30) gebildet wird.

2. VR-Vorrichtung (10) nach einem der vorherigen Ansprüche, **dadurch gekennzeichnet, dass** das Objekt (18) bewegbare Abschnitte (36) und die Positionserfassungseinrichtung (24) am Objekt (18) anbringbare Positionssensoren (38) aufweist, mit welchem die Bewegungen der bewegbaren Abschnitte (36) erfassbar sind.

3. VR-Vorrichtung (10) nach einem der vorherigen Ansprüche, **dadurch gekennzeichnet, dass** die VR-Vorrichtung (10) einen Geruchserzeuger (40) zum Erzeugen von Gerüchen umfasst, welche auf die gemäß der virtuellen Realität zu erwartende Gerüche angepasst sind.

4. VR-Vorrichtung (10) nach einem der vorherigen Ansprüche, **dadurch gekennzeichnet, dass** das Objekt (18) ein Roboter (34) oder eine natürliche Person (34) ist.

5. VR-Vorrichtung (10) nach einem der vorherigen Ansprüche, **dadurch gekennzeichnet, dass** die VR-Vorrichtung (10) ein Routenvorgabemittel (42) umfasst, welches derart eingerichtet ist, dass sich das Objekt (18) auf einer vordefinierten Route innerhalb des VR-Abschnitts (12) bewegt.

6. VR-Vorrichtung (10) nach einem der Ansprüche 1 bis 4,
**dadurch gekennzeichnet, dass** die VR-Vorrichtung (10) ein Routenvorgabemittel (42) umfasst, welches derart eingerichtet ist, dass sich das Objekt (18) auf einer nicht vordefinierten Route innerhalb des VR-Abschnitts (12) bewegt.

## Claims

1. VR apparatus (10) for creating and displaying a virtual reality, comprising
- a virtual reality section (12), within which at least one user (16) and at least one object (18) can freely move about, wherein the VR apparatus (10) comprises
- means with which a virtual reality, which corresponds to the position and movements of the user (16) and of the object (18) in the VR section (12), can be created and displayed on a head mounted display (21) assigned to the user in dependency on the position and movement of the user (16) in the VR section (12), and
- a position detection system (24) for detecting the position and movement of the user (16) and of the object (18) in the VR section (12),
- wherein the object (18) comprises an outer shape which, at least with respect to its geometric shape and size, is adapted to an outer shape expected in accordance with a virtual reality or with another virtual reality,
**characterized in that**
- the VR apparatus (10) includes numerous shaped bodies (30) which can be detachably attached to the object (18) and which comprise an outer shape which is adapted to the outer shaped expected in accordance with the virtual reality,
- the object (18) comprises a surface with haptics which are adapted to the haptics expected in accordance with the virtual reality,
- the shaped bodies (30) are implemented as inflatable envelopes (32), and
- the surfaces are formed by the shaped bodies (30).

2. VR apparatus in accordance with claim 1,
**characterized in that** the object (18) comprises moveable segments (36) and **in that** the position detection system (24) comprises position sensors (38) which can be attached to
the object (18) and by means of which the movements of the moveable segments (36) can be detected.

3. VR apparatus in accordance with either of the preceding claims,
**characterized in that** the VR apparatus (10) includes a scent generator (40) for generating scents which are adapted to the scents expected in accordance with the virtual reality.

4. VR apparatus (10) in accordance with any of the preceding claims,
**characterized in that** the object (18) is a robot (34) or a physical person (34).

5. VR apparatus (10) in accordance with any of the preceding claims,
**characterized in that** the VR apparatus (10) includes means for route indication (42) which are configured such that the object (18) moves along a previously defined route
within the VR section (12).

6. VR apparatus (10) in accordance with any of the claims 1 to 4,
**characterized in that** the VR apparatus (10) includes means for route indication (42) which are configured such that the object (18) moves along a route within the VR section (12) which was not previously defined.

## Revendications

1. Dispositif de réalisation virtuelle RV (10) pour générer et représenter une réalité virtuelle RV comprenant :
- un segment RV (12) dans lequel au moins un utilisateur (16) et au moins un objet (18) peuvent se déplacer librement,
le dispositif RV (10) comprenant :
- des moyens pour générer une réalité virtuelle correspondant à la position et aux mouvements de l'utilisateur (16) et de l'objet (18) dans le segment RV (12), et pouvant être représentée sur un affichage installé sur la tête (21) de l'utilisateur (16) en fonction de la position et du mouvement de l'utilisateur (16) dans le segment RV (12), et
- une installation de saisie de position (24) pour saisir la position et les mouvements de l'utilisateur (16) et de l'objet (18) dans le segment RV (12),
- l'objet (18) ayant une forme extérieure adaptée au moins pour la forme géométrique et les dimensions à une réalité virtuelle ou à une autre réalité virtuelle d'une forme extérieure prévisible,
**caractérisé en ce que**
- le dispositif RV (10) comporte plusieurs corps de forme (30) qui se mettent de manière amovible sur l'objet (18) et qui ont une forme extérieure adaptée à la forme extérieure prévisible selon la réalité virtuelle,
- l'objet (18) a une surface extérieure avec une haptique adaptée à la haptique prévisible selon la réalité virtuelle,
- les corps de forme (30) sont des enveloppes gonflables (32), et
- la surface extérieure est formée par les corps de forme (30) .

2. Dispositif RV (10) selon la revendication précédente,
**caractérisé en ce que**
l'objet (18) comporte des segments mobiles (36) et l'installation de saisie de position (24) comporte des capteurs de position (38) qui se mettent sur l'objet (18) et par lesquels on peut saisir les mouvements des segments mobiles (36).

3. Dispositif RV (10) selon l'une des revendications précédentes,
**caractérisé en ce que**
le dispositif RV (10) comprend un générateur d'odeur (40) pour générer des odeurs adaptées aux odeurs prévisibles selon la réalité virtuelle.

4. Dispositif RV (10) selon l'une des revendications précédentes,
**caractérisé en ce que**
l'objet (18) est un robot (34) ou une personne réelle (34).

5. Dispositif RV (10) selon l'une des revendications précédentes,
**caractérisé en ce que**
le dispositif RV (10) comprend un moyen pour prédéfinir un trajet (42) conçu pour que l'objet (18) se déplace sur un trajet prédéfini à l'intérieur du segment RV (12).

6. Dispositif RV (10) selon l'une des revendications 1 à 4,
**caractérisé en ce que**
le dispositif RV (10) comprend un moyen pour prédéfinir un trajet (42) qui est conçu pour que l'objet (18) se déplace sur un trajet non prédéfini sur le segment RV (12).
